# EUROPÄISCHE PATENTSCHRIFT

(11) **EP 1 289 176 B1**
(45) Veröffentlichungstag und Bekanntmachung des Hinweises auf die Patenterteilung: **29.12.2004**
(21) Anmeldenummer: 01120361.9
(22) Anmeldetag: 24.08.2001
(51) Int. Cl.: H04B 10/18

(54) **Anordnung und Verfahren zur Erzeugung einer vorgebbaren Polarisations-Moden-Dispersion**
Method and apparatus for generating a predetermined polarisation mode dispersion
Dispositif et méthode pour générer une dispersion des modes de polarisation prédéterminée

(43) Veröffentlichungstag der Anmeldung: 05.03.2003
(73) Patentinhaber: Tektronix Munich GmbH, 85757 Karlsfeld (DE)
(72) Erfinder: Bandemer, Adalbert Dr., Gaussstrasse 11, 85757 Karlsfeld (DE); Palme, Dieter, Dipl.-Phys., Gaussstrasse 11, 85757 Karlsfeld (DE)
(74) Vertreter: Schurack, Eduard F.

(56) Entgegenhaltungen:
- EP-A- 1 109 338
- DE-A- 19 816 178
- KUDOU T ET AL: "THEORETICAL BASIS OF POLARIZATION MODE DISPERSION EQUALIZATION UP TO THE SECOND ORDER" JOURNAL OF LIGHTWAVE TECHNOLOGY, IEEE. NEW YORK, US, Bd. 18, Nr. 4, April 2000 (2000-04), Seiten 614-617, XP000989286 ISSN: 0733-8724

## Beschreibung

Die Erfindung bezieht sich auf eine Anordnung und ein Verfahren zur Erzeugung einer vorgebbaren Polarisations-Moden-Dispersion (PMD).

Derartige Anordnungen werden beispielsweise zur Erzeugung einer bestimmten PMD für Meß- oder Prüfsysteme oder zur Kompensation PMD-bedingter Verzerrungen in optischen Transmissionssystemen und insbesondere Transmissionsfasern benötigt.

Da jede optische Übertragungsstrecke doppelbrechende Elemente enthält, laufen Lichtsignale unterschiedlicher Polarisation mit verschiedenen Gruppengeschwindigkeiten durch die Strecke. Beim Empfänger kommen die Lichtanteile unterschiedlicher Polarisation daher zeitlich gegeneinander verzögert an; dieser Laufzeiteffekt führt zu einer Verbreiterung des empfangenen Signals und damit zu einer Beeinträchtigung der Übertragungsqualität. Dies kann insbesondere zu einer Erhöhung der Bitfehlerrate führen.

Die Polarisations-Moden-Dispersion umfaßt alle polarisationsabhängigen Laufzeiteffekte, bei denen sich die Signalausbreitung vollständig durch das Ausbreitungsverhalten zweier voneinander unabhängiger und zueinander orthogonaler Polarisationsmoden beschreiben läßt. Da sich die Doppelbrechung durch äußere Einflüsse, wie Temperaturänderungen und mechanische Belastungen ständig ändern kann, und zudem von der Wellenlänge abhängt, verändern sich gleichermaßen sowohl die Lage der "Principial States of Polarisation" (PSP) als auch die Laufzeitdifferenz zwischen den PSP's. Diese Effekte bezeichnet man auch als Polarisations-Moden-Dispersion zweiter und höherer Ordnung.

Aus den genannten Effekten resultiert ein zeitlich fluktuierendes wellenlängenabhängiges PMD-Verhalten mit Zeitkonstanten in einem weiten Zeitbereich.

XP989286 offenbart eine Anordnung zur PMD-Kompensation erster Ordnung gefolgt von einer Kompensationseinrichtung zweiter Ordnung.

DE19816178 beschreibt eine mehrstufige PMD-Kompensation jeweils bestehend aus einem Polarisationstransformator und einem polarisationserhaltenden Lichtwellenleiter mit differentieller Gruppenlaufzeit.

EP1109338 offenbart ein PMD-Kompensationsverfahren mit Hilfe einer Frequenzweiche, wobei jeder Frequenzbereich einzeln kompensiert wird bevor die Teilbereiche wieder zusammengeführt werden.

Eine bekannte Anordnung weist prinzipiell ein erstes Polarisationssplitter/combiner-Element, das das ankommende Signal in zwei Signale mit zueinander senkrechter Polarisationsrichtung aufspaltet, eine Verzögerungseinheit, die in mindestens einer der Signalstrecken der beiden (aufgespaltenen) Signale angeordnet ist, und prinzipiell ein zweites Polarisationssplitter/combiner-Element auf, das die beiden getrennten Signale wieder zusammenführt.

Diese bekannte Anordnung hat den Nachteil, das sie lediglich die Kompensation PMD-bedingter Verzerrungen erster Ordnung erlaubt. Gerade bei langen Übertragungsstrecken spielen jedoch PMD-bedingter Verzerrungen 2. Ordnung eine erhebliche Rolle.

Eine weitere bekannte Anordnung zur PMD-Emulation ist beispielsweise eine Anordnung aus einer Anzahl von doppelbrechenden Elementen, insbesondere von PM-Fasern mit unterschiedlichen oder gleichen Gruppenlaufzeiten, denen jeweils eine Polarisationstransformationseinheit vorgeschaltet ist. Hier erfolgt die notwendige Aufspaltung in die zwei orthogonalen Polarisationsebenen durch die Eigenschaft der PM-Faser, für ihre PSP unterschiedliche Ausbreitungsgeschwindigkeiten zu besitzen.

Der Erfindung liegt die Aufgabe zugrunde, eine Anordnung zur Erzeugung einer vorgebbaren Polarisations-Moden-Dispersion anzugeben, die auch die Erzeugung einer Polarisations-Moden-Dispersion zweiter Ordnung erlaubt, und die die Polarisations-Moden-Dispersion einer realen Transmissionsfaser möglichst exakt nachbildet.

Eine erfindungsgemäße Lösung dieser Aufgabe ist im Patentanspruch 1 sowie 14 angegeben. Bevorzugte Weiterbildungen der Erfindung sind Gegenstand weiterer abhängiger Ansprüche.

Gemäß der Erfindung wird bereitgestellt eine Anordnung zur Erzeugung einer vorgebbaren Polarisations-Moden-Dispersion, mit
einem ersten, um die Ausbreitungsrichtung des Lichtes drehbaren doppelbrechenden Element bzw. Polarisationssplitter/combiner-Elemente, das das Eingangssignal in zwei Signale mit zueinander senkrechter Polarisationsrichtung aufspaltet, wobei das erste doppelbrechende Element die orthogonalen Polarisationen mit zueinander unterschiedlicher Laufzeit weiterleitet,
einem zweiten, ebenfalls um die Ausbreitungsrichtung des Lichtes drehbaren doppelbrechendem Element bzw. Polarisationssplitter/combiner-Elemente, bei welchem die orthogonal polarisierten Eingangssignale aus einem Ausgang austreten,
wobei zur Erzeugung einer Polarisations-Moden-Dispersion zweiter Ordnung ein Drehelement vorgesehen ist, das die Polarisations-Hauptachsen hinter dem zweiten doppelbrechenden Element um einen geeigneten Winkel zueinander verdreht, und
wobei das aus dem Drehelement austretende Lichtsignal in eine Anordnung eingespeist wird, die ebenfalls ein um die Ausbreitungsrichtung des Lichtes drehbares doppelbrechendes Element bzw. Polarisationssplitter/combiner-Element, das das ankommende Signal in zwei Signale mit zueinander senkrechter Polarisationsrichtung aufspaltet und mit unterschiedlicher Laufzeit weiterleitet, und ein ebenfalls um die Ausbreitungsrichtung des Lichtes drehbares doppelbrechendes Element bzw. Polarisationssplitter/combiner-Element aufweist, bei welchem die orthogonal polarisierten Eingangssignale aus einem Ausgang austreten.

Gemäß einer bevorzugten Ausführungsform der Erfindung, ist der Winkel, um den das Drehelement die Polarisations-Hauptachsen gegeneinander verdreht, einstellbar. Hierdurch ist es möglich, die Steilheit der Principial State of Polarisation (PSP) sowie das Verhältnis der Polarisations-Moden-Dispersion erster Ordnung zur Polarisations-Moden-Dispersion zweiter Ordnung einzustellen.

Für die in der Polarisationsrichtung verdrehte Einspeisung hat sich eine Verdrehungswinkel, um den das Drehelement die Polarisations-Hauptachsen gegeneinander verdreht, von ca. 35° bis 55°, bevorzugt von ca. 45° als besonders geeignet herausgestellt. Bei einem derartigen Winkel ist das statistische Verhältnis zwischen Polarisations-Moden-Dispersion (PMD) 1. und Polarisations-Moden-Dispersion (PMD) 2. Ordnung dem einer realen Transmissionsfaser in optischen Netzwerken praktisch hinreichend angepaßt.

Weiterhin bevorzugt ist eine Umlenkeinrichtung vorgesehen, die veranlaßt, daß das in seiner Polarisation gedrehte Ausgangssignal das zweite doppelbrechende Element und das erste doppelbrechende Element auf getrenntem optischen Weg rückwärts durchläuft, wobei das Signal am ersten doppelbrechenden Element ausgekoppelt wird bzw. austritt. Somit können ein und die gleichen optischen Elemente zweifach durchlaufen werden, so daß keine weiteren optischen Elemente vorgesehen werden müssen und somit Kosten gespart werden können.

Bevorzugt weist das erste doppelbrechende Element eine Verzögerungsstrecke auf, die eine der orthogonalen Polarisationen gegenüber der anderen der orthogonalen Polarisationen verzögert., wobei die Verzögerungsstrecke bevorzugt optisch oder elektrisch realisiert wird. Als Verzögerungsstrecken können die verschiedensten bekannten Lösungen eingesetzt werden. Beispielsweise ist es möglich, das die Verzögerungsstrecke optisch oder elektrisch realisiert wird.

Eine erste optischen Realisierung benutzt mindestens zwei gegeneinander und gemeinsam verdrehbare doppelbrechende Elemente, mit der Eigenschaft für orthogonale Polarisationen unterschiedliche Ausbreitungsgeschwindigkeiten zu besitzen.

Bei einer zweiten Realisierung der Verzögerungsstrecke werden die Fasern mechanischen Kräften ausgesetzt, so das sich die optischen Parameter der Fasern ändern.

Auch die Einstellung des Winkels, um den die Hauptachsenlage der Elemente zueinander bzw. gegeneinander verdreht werden, kann auf die verschiedensten Arten erfolgen:

So ist es möglich, das zur Einstellung des Winkels zwei PM-Fasern unter einem dem einzustellenden Winkel entsprechenden Winkel miteinander verspleißt werden.

Ferner können zur Einstellung des Winkels optische Schleifringe und/oder Wellenplatten sowie optische aktive Bauelemente in der Art von Polarisationsdrehem eingesetzt werden.

In den Ausführungen, die doppelbrechende Elemente benutzen, kann auf gesonderte Polarisationssplitter/ combiner-Elemente vollständig verzichtet werden, da sowohl die Aufspaltung in orthogonale Anteile, als auch die Laufzeitdifferenzen intrinsisch erreicht werden.

Gemäß der Erfindung wird weiterhin ein Verfahren zur Erzeugung einer vorgebbaren Polarisations-Moden-Dispersion bereitgestellt, mit folgenden Schritten:
Aufspalten eines Licht-Eingangssignals in zwei Signale mit zueinander senkrechter Polarisationsrichtung mittels eines ersten doppelbrechenden Elements bzw. Polarisationssplitter/combiner-Element, wobei das erste doppelbrechende Element die orthogonalen Polarisationen mit zueinander unterschiedlicher Laufzeit weiterleitet,
Zusammenführen der aus dem ersten doppelbrechenden Element austretenden Signalen mit orthogonalen Polarisationen mittels eines zweiten, ebenfalls um die Ausbreitungsrichtung des Lichtes drehbaren doppelbrechendem Elements bzw. Polarisationssplitter/combiner-Element, bei welchem die orthogonal polarisierten Eingangssignale aus einem Ausgang austreten,
zueinander Verdrehen der Polarisations-Hauptachsen hinter dem zweiten doppelbrechenden Element um einen geeigneten Winkel mittels eines Drehelements zur Erzeugung einer Polarisations-Moden-Dispersion zweiter Ordnung, und
erneutes Aufspalten des aus dem Verdrehelement austretenden Signals in zwei Signale mit zueinander senkrechter Polarisationsrichtung mittels eines doppelbrechenden Elements bzw. Polarisationssplitter/combiner-Element, wobei das doppelbrechenden Element die orthogonalen Polarisationen mit zueinander unterschiedlicher Laufzeit weiterleitet, sowie
erneutes Zusammenführen der aus dem doppelbrechenden Element austretenden Signalen mit orthogonalen Polarisationen mittels eines ebenfalls um die Ausbreitungsrichtung des Lichtes drehbaren doppelbrechendem Elements bzw. Polarisationssplitter/combiner-Element, bei welchem die orthogonal polarisierten Eingangssignale aus einem Ausgang austreten.

Die Erfindung wird nachstehend anhand von Ausführungsbeispielen unter Bezugnahme auf die Zeichnungen näher beschrieben:
- Fig. 1: Prinzipieller Aufbau Anordnung zur Erzeugung einer vorgebbaren Polarisations-Moden-Dispersion mit doppelbrechenden Elementen gemäß einer Ausführungsform der Erfindung.
- Fig. 2: Prinzipieller Aufbau einer Anordnung zur Erzeugung einer vorgebbaren Polarisations-Moden-Dispersion mit faseroptischen Bauelementen gemäß einer Ausführungsform der Erfindung.
- Fig. 3: Prinzipieller Aufbau einer Anordnung zur Erzeugung einer vorgebbaren Polarisations-Moden-Dispersion erster und zweiter Ordnung unter Doppelnutzung der Elemente gemäß einer Ausführungsform der Erfindung.

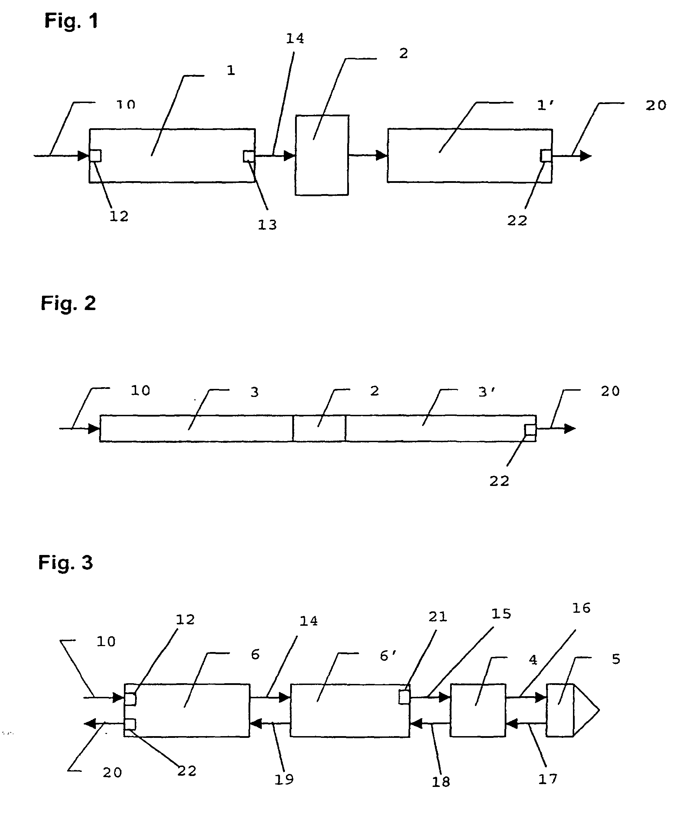

Fig. 1 zeigt eine Anordnung gemäß einer Ausführungsform der Erfindung, die ein erstes doppelbrechendes Element 1, auf dessen Anschluß bzw. Lichteinkopplungseinrichtung 12 das ankommende Lichtsignal bzw. -puls 10 auftrifft bzw. über welche das Lichtsignal 10 eingekoppelt wird. Das erste doppelbrechende Element 1 kann insbesondere eine high-order-Wellenplatte oder ein als Verzögerungselement geschnittener Stab aus z.B. Calcit oder Yttriumvanadat sein. Das erste doppelbrechende Element 1 leitet die orthogonalen Polarisationen des ankommenden Signals 10 entsprechend der Orientierung des ersten doppelbrechenden Elementes 1 zum Eingangssignal 10 aufgeteilt mit unterschiedlichen Geschwindigkeiten. Am Ausgang bzw. Lichtauskopplungseinrichtung 13 des ersten doppelbrechenden Elementes 1 ist ein Polarisationstransformator/Dreher 2 angeordnet, der die Polarisationsebene des Lichtsignals 14 um einen geeigneten Wert bzw. Winkel dreht bzw. transformiert. Ein zweites doppelbrechendes Element 1', führt die beiden transformierten orthogonalen Signale wiederum mit anteiligen Amplituden in den Principal States of Polarisation (PSP's) des zweiten doppelbrechenden Elementes 1'. Am Ausgang 22 des zweiten doppelbrechenden Elementes 1' erscheint ein Signal mit einer PMD 1. Ordnung, die über die Länge der ersten und zweiten doppelbrechenden Elemente 1, 1' und damit der Laufzeitdifferenz für die othogonalen Signalanteile und der Drehung der Polarisationstransformators/Drehers 2 eingestellt werden kann.

Fig. 2 zeigt den gleichen Aufbau unter Nutzung von doppelbrechenden Fasern (PM-Fasern) 3, 3' als doppelbrechende Elemente 3, 3', wobei die Polarisationstransformation/ Drehung in diesem Fall durch die Verdrehung der zweiten Faser 3' gegen die erste Faser 3 erreicht wird. Diese Verdrehung ist bevorzugt durch festes Spleißen unter vorgegebenem Winkel oder durch die Verwendung einer Dreheinrichtung 2, die auch als Polarisationtransformator/Dreher ausgeführt sein kann, möglich. Eine Beeinflussung der Laufzeitdifferenz ist über eine zusätzliche Streßeinrichtung erreichbar, die mittels mechanischer Verformung der Fasern durch radialen Druck oder durch Temperaturgradienten bewirkt wird. Das Signal 10 wird in die erste PM-Faser 3 eingespeist und tritt über die Polarisationtransformations/Dreheinrichtung 2 in die zweite, dadurch gegen die erste PM-Faser 3 in den PSP verdrehte PM-Faser 3' ein. Am Ausgang 22 der PM-Faser 3' entsteht ein mit PMD erster Ordnung behaftetes Ausgangssignal 20.

Zur Erzeugung einer Polarisations-Moden-Dispersion zweiter Ordnung ist, wie in Fig. 3 gezeigt, ein Polarisationsdreher 4 vorgesehen, der die Polarisations-Hauptachsen des aus dem Ende des zweiten doppelbrechenden Elementes 6' austretenden Signals 15 um einenbevorzugt einstellbaren Winkel bzw. Drehwinkel gegeneinander verdreht. Das somit gewonnene Signal 16 wird durch eine Umlenkeinrichtung 5 in einen in der Richtung umgekehrten und parallel versetzen Strahl 17 umsetzt bzw. umgelenkt bzw. reflektiert und nunmehr in Rückwärtsrichtung in das zweite doppelbrechende Element 6' und dann in das dagegen verdrehte erste doppelbrechende Element 6 einkoppelt bzw. durch diese geführt. Das nunmehr nochmals manipulierte Signal 20 steht am räumlich getrennten Ausgang 22 zur Verfügung bzw. tritt aus diesem aus bzw. wird aus diesem ausgekoppelt. Durch den doppelten Durchgang durch die PMD erzeugenden Elemente 6, 6' entsteht neben PMD erster Ordnung nun auch PMD zweiter Ordnung. Alternativ kann der Strahl 16 ebenfalls nicht umgelenkt werden und durch getrennte, zusätzlich vorgesehene PMD erzeugenden Elemente, wie sie z.B. in FIGS. 1 und 2 gezeigt sind.

Vorstehend ist die Erfindung anhand eines Ausführungsbeispiels beispielhaft beschrieben worden. Selbstverständlich sind die verschiedensten Abwandlungen möglich. So ist es möglich, das der Winkel, um den das Element die Polarisations-Hauptachsen gegeneinander verdreht, einstellbar ist. Zur zur Einstellung des Winkels optische Schleifringe und/oder schrägstehende Wellenplatten sowie Polarisationsdreher eingesetzt werden.

Wie sich aus den vorstehend beschriebenen Ausführungsformen ergibt, wird zur Erzeugung einer Polarisations-Moden-Dispersion, die der PMD zweiter Ordnung einer realen Faser entspricht, von einer Anordnung mit zwei doppelbrechenden Elementen ausgegangen, die dadurch weitergebildet wird, daß zusätzliche Elemente vorgesehen sind, die die Polarisations-Orientierung der jeweils einfallenden Strahlung zu den laufzeiterzeugenden Elementen um einen geeigneten Winkel gegeneinander verdrehen. Das aus diesen Elementen austretende Lichtsignal bzw. -puls wird in eine weitere Anordnung eingespeist, die ebenfalls ein Polarisationssplitter/combiner-Element, eine Verzögerungsstrecke und ein weiteres Polarisationssplitter/combiner-Element zum Zusammenführen der beiden Signalstrecken, oder dem doppelbrechendem Element aufweist. Mit dieser Anordnung ist zusätzlich zur Erzeugung einer Polarisations-Moden-Dispersion erster Ordnung auch die Erzeugung einer Dispersion zweiter Ordnung möglich. Von besonderem Vorteil ist es, das es bevorzugt nicht einmal erforderlich ist, zusätzliche Bauelemente, die die Kosten erhöhen würden, zu verwenden. Vielmehr ist es bevorzugt möglich, die Erzeugung einer Polarisations-Moden-Dispersion zweiter Ordnung dadurch zu erhalten, das die .. Anordnung mit definiert verdrehter Orientierung der Polarisation ein weiteres mal bevorzugt auf getrenntem optischen Weg durchlaufen wird. Am Eingang der Einrichtung wird dieses räumlich versetzt erscheinende Signal dann ausgekoppelt. Das ausgekoppelte Signal weist dann die gewünschte Polarisations-Moden-Dispersion erster und zweiter Ordnung auf. Weiterhin ist vorteilhaft, das die doppelbrechenden Elemente eine Dispersion der Brechzahlen für den ordentlichen und außerordentlichen Strahl aufweisen. Dies führt zu einer weiteren, erwünschten Abhängigkeit der Laufzeitdifferenz von der Wellenlänge.

Ein besonderer Vorteil dieser Anordnung ist, das zur Einstellung der PMD 2.ter Ordnung lediglich ein einziger Stellwert, nämlich die Laufzeitdifferenz vorgegeben werden muß.

### Bezugszeichenliste

- 1, 1': Einstellbares doppelbrechendes Laufzeitelement, z.B. drehbar
- 2: Polarisationstransformator/-dreher, einstellbar
- 3, 3': Doppelbrechende Faser (PM-Faser), ggf. mit Faser-Stresseinrichtung
- 4: Polarisationsdreher, einstellbar
- 5: Umlenkeinrichtung
- 6, 6': PSP-orientierbares doppelbrechendes Laufzeitelement, z.B. drehbar oder mit Polarisationstransformator/Dreher
- 10: Eingangssignal
- 20: Ausgangssignal

## Patentansprüche

1. Anordnung zur Erzeugung einer vorgebbaren Polarisations-Moden-Dispersion, mit
- einem ersten, um die Ausbreitungsrichtung des Lichtes drehbaren doppelbrechenden Element (1; 3; 6), das derart ausgestaltet ist, dass das Eingangssignal (10) in zwei Signale mit zueinander senkrechter Polarisationsrichtung aufspaltet, wobei das erste doppelbrechende Element (1; 3; 6) die orthogonalen Polarisationen mit zueinander unterschiedlicher Laufzeit weiterleitet,
- einem zweiten, ebenfalls um die Ausbreitungsrichtung des Lichtes drehbaren doppelbrechendem Element (1'; 3'; 6'), bei welchem die orthogonal polarisierten Eingangssignale (14) aus einem Ausgang (21) austreten,
wobei zur Erzeugung einer Polarisations-Moden-Dispersion zweiter Ordnung ein Drehelement (2; 4) vorgesehen ist, das die Polarisations-Hauptachsen hinter dem zweiten doppelbrechenden Element (1'; 3'; 6') um einen geeigneten Winkel zueinander verdreht, und
wobei das aus dem Drehelement (2; 4) austretende Lichtsignal (16; 17) in eine Anordnung (2, 1, 1'; 2, 3, 3'; 4, 6, 6') eingespeist wird, die ebenfalls ein um die Ausbreitungsrichtung des Lichtes drehbares doppelbrechendes Element (1'; 3'; 6'), das derart ausgestaltet ist, dass das ankommende Signal (16, 17) in zwei Signale mit zueinander senkrechter Polarisationsrichtung aufspaltet und mit unterschiedlicher Laufzeit weiterleitet, und ein ebenfalls um die Ausbreitungsrichtung des Lichtes drehbares doppelbrechendes Element (1; 3; 6) aufweist, bei welchem die orthogonal polarisierten Eingangssignale (14) aus einem Ausgang (22) austreten.

2. Anordnung nach Anspruch 1, wobei der Winkel, um den das Drehelement (2; 4) die Polarisations-Hauptachsen gegeneinander verdreht, einstellbar ist.

3. Anordnung nach einem der vorangehenden Ansprüche, wobei der Winkel, um den das Drehelement (2; 4) die Polarisations-Hauptachsen gegeneinander verdreht, ca. 35° bis 55°, bevorzugt ca. 45° beträgt.

4. Anordnung nach einem der vorangehenden Ansprüche, wobei eine Umlenkeinrichtung (5) vorgesehen ist, die veranlaßt, daß das in seiner Polarisation gedrehte Ausgangssignal (16) das zweite doppelbrechende Element (6') und das erste doppelbrechende Element (6) auf getrenntem optischen Weg rückwärts durchläuft, wobei das Signal am ersten doppelbrechenden Element (6) ausgekoppelt wird bzw. austritt.

5. Anordnung nach einem der vorangehenden Ansprüche, wobei das erste doppelbrechende Element (1; 3; 6) eine Verzögerungsstrecke aufweist, die eine der orthogonalen Polarisationen gegenüber der anderen der orthogonalen Polarisationen verzögert., wobei die Verzögerungsstrecke bevorzugt optisch oder elektrisch realisiert wird.

6. Anordnung nach Anspruch 5, wobei der Strahl in der Anordnung als Freistrahl geführt wird, und wobei die Laufzeitdifferenz durch Änderung der geometrischen Anordnung der einzelnen Bauteilen geändert wird.

7. Anordnung nach Anspruch 5, wobei doppelbrechende optische Elemente (1, 1'; 3, 3'; 6, 6') als Verzögerungsstrecke zur Einstellung der Verzögerung gegeneinander verdreht werden.

8. Anordnung nach Anspruch 5, wobei Fasern als Verzögerungsstrecke zur Einstellung der Verzögerung mechanischen Kräften ausgesetzt werden.

9. Anordnung nach einem der vorangehenden Ansprüche, wobei zur Einstellung des Winkels zwei doppelbrechende Fasern (3, 3') unter einem dem einzustellenden Winkel entsprechenden Winkel miteinander verspleißt werden.

10. Anordnung nach einem der vorangehenden Ansprüche, wobei zur Einstellung des Winkels optische Schleifringe und/oder optisch aktive Elemente und/oder schrägstehende Wellenplatten eingesetzt werden.

11. Anordnung nach einem der vorangehenden Ansprüche, wobei die Polarisationssplitter/combiner-Elemente (6; 6') als doppelbrechende optische Elemente oder als all-in-faser-Elemente ausgeführt sind.

12. Anordnung nach einem der vorangehenden Ansprüche, wobei alle Lichtwege polarisationserhaltend sind.

13. Anordnung nach Anspruch 12, wobei Freistrahlwege und/oder doppelbrechende Fasern die Lichtwege bilden.

14. Verfahren zur Erzeugung einer vorgebbaren Polarisations-Moden-Dispersion, mit folgenden Schritten:
- Aufspalten eines Licht-Eingangssignals (10) in zwei Signale mit zueinander senkrechter Polarisationsrichtung mittels eines ersten doppelbrechenden Elements (6), wobei das erste doppelbrechende Element (6) die orthogonalen Polarisationen mit zueinander unterschiedlicher Laufzeit weiterleitet,
- Zusammenführen der aus dem ersten doppelbrechenden Element (6) austretenden Signalen (14) mit orthogonalen Polarisationen mittels eines zweiten, ebenfalls um die Ausbreitungsrichtung des Lichtes drehbaren doppelbrechendem Elements (6'), bei welchem die orthogonal polarisierten Eingangssignale (14) aus einem Ausgang (21) austreten,
- zueinander Verdrehen der Polarisations-Hauptachsen hinter dem zweiten doppelbrechenden Element (6') um einen geeigneten Winkel mittels eines Drehelements (4) zur Erzeugung einer Polarisations-Moden-Dispersion zweiter Ordnung, und
- erneutes Aufspalten des aus dem Verdrehelement (4) austretenden Signals (16, 17) in zwei Signale mit zueinander senkrechter Polarisationsrichtung mittels eines doppelbrechenden Elements (6'), wobei das doppelbrechende Element (6') die orthogonalen Polarisationen mit zueinander unterschiedlicher Laufzeit weiterleitet, sowie
- erneutes Zusammenführen der aus dem doppelbrechenden Element (6') austretenden Signale (19) mit orthogonalen Polarisationen mittels eines ebenfalls um die Ausbreitungsrichtung des Lichtes drehbaren doppelbrechendem Elements (6), bei welchem die orthogonal polarisierten Eingangssignale (19) aus einem Ausgang (22) austreten.

## Claims

1. Arrangement for generating a presettable polarization mode dispersion including
- a first birefringent element (1; 3; 6) rotatable about the propagation direction of the light, which is designed such that the input signal (10) splits into two signals with mutually orthogonal polarizing direction, wherein the first birefringent element (1; 3; 6) passes the orthogonal polarizations with mutually different propagation time,
- a second birefringent element (1', 3', 6'), also rotatable about the propagation direction of the light, wherein the orthogonally polarized input signals (14) emerge from an exit (21),
wherein for generating a second order polarization mode dispersion, a rotary member (2; 4) is provided, which rotates the polarization main axes behind the second birefringent element (1', 3', 6') by a suitable angle with respect to each other, and
wherein the light signal (16; 17) emerging from the rotary member (2; 4) is input into an arrangement (2, 1, 1'; 2, 3, 3'; 4, 6, 6'), which also has a birefringent element (1'; 3', 6') rotatable about the propagation direction of the light, which is designed such that the incoming signal (16, 17) splits into two signals with mutually orthogonal polarizing direction and passes them with different propagation time, and a birefringent element (1; 3; 6) also rotatable about the propagation direction of the light, wherein the orthogonally polarized input signals (14) emerge from an exit (22).

2. Arrangement according to claim 1, wherein the angle, by which the rotary member (2; 4) rotates the polarization main axes with respect to each other, is adjustable.

3. Arrangement according to any one of the preceding claims, wherein the angle, by which the rotary member (2; 4) rotates the polarization main axes with respect to each other, is ca. 35° to 55°, preferably ca. 45°.

4. Arrangement according to any one of the preceding claims, wherein a deflecting means (5) is provided, which causes the output signal (16) rotated in its polarization to backwardly pass the second birefringent element (6') and the first birefringent element (6) on a separated optical path, wherein the signal is coupled out or emerges at the first birefringent element (6), respectively.

5. Arrangement according to any one of the preceding claims, wherein the first birefringent element (1; 3; 6) has a delay section, which delays one of the orthogonal polarizations with respect to the other one of the orthogonal polarizations, wherein the delay section is preferably optically or electrically realized.

6. Arrangement according to claim 5, wherein the beam is guided as a free beam in the arrangement, and wherein the propagation time difference is changed by changing the geometrical arrangement of the individual components.

7. Arrangement according to claim 5, wherein birefringent optical elements (1, 1'; 3, 3'; 6, 6') as the delay section are rotated with respect to each other for adjusting the delay.

8. Arrangement according to claim 5, wherein fibers as the delay section are subjected to mechanical forces for adjusting the delay.

9. Arrangement according to any one of the preceding claims, wherein for adjusting the angle, two birefringent fibers (3, 3') are spliced to each other in an angle corresponding to the angle to be adjusted.

10. Arrangement according to any one of the preceding claims, wherein for adjusting the angle, optical sliding rings and/or optically active elements and/or inclined wave plates are employed.

11. Arrangement according to any one of the preceding claims, wherein the polarization splitter/combiner elements (6; 6') are designed as birefringent optical elements or as all-in-fiber elements.

12. Arrangement according to any one of the preceding claims, wherein all of the light paths are polarization-preserving.

13. Arrangement according to claim 12, wherein free beam paths and/or birefringent fibers constitute the light paths.

14. Method for generating a presettable polarization mode dispersion including the following steps:
- splitting a light input signal (10) into two signals with mutually orthogonal polarizing direction by means of a first birefringent element (6), wherein the first birefringent element (6) passes the orthogonal polarizations with mutually different propagation time,
- combining the signals (14) emerging from the first birefringent element (6) with orthogonal polarizations by means of a second birefringent element (6') also rotatable about the propagation direction of the light, wherein the orthogonally polarized input signals (14) emerge from an exit (21),
- rotating the polarization main axes with respect to each other behind the second birefringent element (6') by a suitable angle by means of a rotary member (4) for generating a second order polarization mode dispersion, and
- again splitting the signal (16, 17) emerging from the rotary member (4) into two signals with mutually orthogonal polarizing direction by means of a birefringent element (6'), wherein the birefringent element (6') passes the orthogonal polarizations with mutually different propagation time, as well as
- again combining the signals (19) emerging from the birefringent element (6') with orthogonal polarizations by means of a birefringent element (6) also rotatable about the propagation direction of the light, wherein the orthogonally polarized input signals (19) emerge from an exit (22).

## Revendications

1. Dispositif pour générer une dispersion des modes de polarisation prédéterminée, comportant
- un premier élément de double réfraction (1 ; 3 ; 6) pouvant pivoter autour de la direction de diffusion de la lumière, constitué de manière telle que le signal d'origine (10) se scinde en deux signaux de direction de polarisation perpendiculaire l'une par rapport à l'autre, le premier élément de double réfraction (1 ; 3 ; 6) retransmettant les polarisations orthogonales selon des durées de parcours différentes l'une par rapport à l'autre,
- un deuxième élément de double réfraction (1' ; 3' ; 6') pouvant également pivoter autour de la direction de diffusion de la lumière,
dans lequel les signaux d'origine (14) de polarisation orthogonale sortent d'une sortie (21),
dans lequel, pour générer une dispersion des modes de polarisation de deuxième ordre, un élément rotatif (2 ; 4) est prévu, qui fait pivoter d'un angle approprié l'un par rapport à l'autre les axes principaux de polarisation derrière le deuxième élément de double réfraction (1' ; 3' ; 6'), et
dans lequel le signal lumineux (16 ; 17) sortant de l'élément rotatif (2 ; 4) est introduit dans un dispositif (2, 1, 1' ; 2, 3, 3' ; 4, 6, 6') qui présente également un élément de double réfraction (1' ; 3' ; 6') pouvant pivoter autour de la direction de diffusion de la lumière, constitué de manière telle qu'il scinde le signal arrivant (16, 17) en deux signaux de direction de polarisation perpendiculaire l'une par rapport à l'autre et les retransmet selon des durées de parcours différentes, et présente un élément de double réfraction (1 ; 3 ; 6) pouvant également pivoter autour de la direction de diffusion de la lumière, dans lequel les signaux d'origine (14) de polarisation orthogonale sortent d'une sortie (22).

2. Dispositif selon la revendication 1, dans lequel l'angle duquel l'élément rotatif (2 ; 4) fait pivoter les axes principaux de polarisation l'un par rapport à l'autre est réglable.

3. Dispositif selon l'une quelconque des revendications précédentes, dans lequel l'angle duquel l'élément rotatif (2 ; 4) fait pivoter les axes principaux de polarisation l'un par rapport à l'autre est compris entre, environ, 35 ° et 55 °, est de préférence d'environ 45°.

4. Dispositif selon l'une quelconque des revendications précédentes, dans lequel un dispositif de déviation (5) est prévu qui provoque que le signal d'origine (16) dont la polarisation a pivoté traverse le deuxième élément de double réfraction (6') et le premier élément de double réfraction (6), en arrière, selon un chemin optique différent, le signal étant découplé au ou sortant du premier élément de double réfraction (6).

5. Dispositif selon l'une quelconque des revendications précédentes, dans lequel le premier élément de double réfraction (1 ; 3 ; 6) présente un parcours de retardement qui retarde l'une des polarisations orthogonales par rapport aux autres polarisations orthogonales, le parcours de retardement étant, de préférence, réalisé optiquement ou électriquement.

6. Dispositif selon la revendication 5, dans lequel le faisceau est conduit dans le dispositif en tant que faisceau libre et dans lequel la différence de temps de parcours est modifiée par changement de la disposition géométrique des différents éléments.

7. Dispositif selon la revendication 5, dans lequel des éléments optiques de double réfraction (1, 1' ; 3, 3' ; 6, 6') en tant que parcours de retardement sont tournés l'un par rapport à l'autre pour régler le retardement.

8. Dispositif selon la revendication 5, dans lequel des fibres en tant que parcours de retardement sont exposées à des forces mécaniques pour régler le retardement.

9. Dispositif selon l'une quelconque des revendications précédentes, dans lequel, pour régler l'angle, deux fibres de double réfraction (3, 3') sont épissées ensemble selon un angle correspondant à l'angle à régler.

10. Dispositif selon l'une quelconque des revendications précédentes, dans lequel des bagues glissantes optiques et/ou des éléments optiques actifs et/ou des plaques ondulées positionnées en biais sont utilisés pour régler l'angle.

11. Dispositif selon l'une quelconque des revendications précédentes, dans lequel les éléments de scission / combinaison de polarisation (6 ; 6') sont réalisés sous forme d'éléments optiques de double réfraction ou en tant qu'éléments entièrement en fibres.

12. Dispositif selon l'une quelconque des revendications précédentes, dans lequel tous les chemins optiques sont conservateurs de polarisation.

13. Dispositif selon la revendication 12, dans lequel des chemins de faisceau libre et/ou des fibres de double réfraction forment les chemins de lumière.

14. Procédé pour générer une dispersion des modes de polarisation prédéterminée, comportant les étapes suivantes
- scission d'un signal d'origine (10) en deux signaux de direction de polarisation perpendiculaire l'une par rapport à l'autre, au moyen d'un premier élément de double réfraction (6), le premier élément de double réfraction (6) retransmettant les polarisations orthogonales selon des durées de parcours différentes l'une par rapport à l'autre,
- regroupement des signaux (14) sortant du premier élément de double réfraction (6) avec des polarisations orthogonales au moyen d'un deuxième élément de double réfraction (6') pouvant également pivoter autour de la direction de diffusion de la lumière, dans lequel les signaux d'origine (14) de polarisation orthogonale sortent d'une sortie (21),
- rotation d'un angle approprié l'un par rapport à l'autre des axes principaux de polarisation derrière le deuxième élément de double réfraction (6') au moyen d'un élément rotatif (4) pour générer une dispersion des modes de polarisation de deuxième ordre, et
- nouvelle scission des signaux (16, 17) sortant de l'élément rotatif (4) en deux signaux de direction de polarisation perpendiculaire l'une par rapport à l'autre au moyen d'un élément de double réfraction (6'), l'élément de double réfraction (6') retransmettant les polarisations orthogonales selon des durées de parcours différentes l'une par rapport à l'autre, ainsi que
- nouveau regroupement des signaux (19) de polarisations orthogonales sortant de l'élément de double réfraction (6') au moyen d'un élément de double réfraction (6) pouvant également pivoter autour de la direction de diffusion de la lumière, dans lequel les signaux d'origine (19) de polarisation orthogonale sortent d'une sortie (22).
